# EUROPEAN PATENT SPECIFICATION

(11) **EP 2 839 997 B1**
(45) Date of publication and mention of the grant of the patent: **19.10.2016**
(21) Application number: 13180847.9
(22) Date of filing: 19.08.2013
(51) Int. Cl.: B60R 22/48

(54) **Arrangement for control of vehicle seat belt alert arrangement, a seat, a vehicle, a method and use of the arrangement**
Anordnung zur Steuerung eines Fahrzeugsicherheitsgurtalarms, Sitz, Fahrzeug, Verfahren und Verwendung der Anordnung
Dispositif de commande d'un système d'alerte de ceinture de sécurité de véhicule, siège, véhicule, procédé et utilisation de ce dispositif

(43) Date of publication of application: 25.02.2015
(73) Proprietor: Volvo Car Corporation, 40 531 Göteborg (SE)
(72) Inventor: Olsson, Daniel, 44135 Alingsås (SE)
(74) Representative: Kraenzmer, Martin

(56) References cited:
- EP-A1- 1 498 328
- EP-A1- 1 925 506
- EP-A1- 2 052 923
- EP-A2- 0 560 351
- US-A- 3 740 567

## Description

### TECHNICAL FIELD

Embodiments herein relate to an arrangement for control of a vehicle seat belt alert arrangement in a vehicle hosting the arrangement. Embodiments herein further relate to a seat comprising an arrangement for control of a vehicle seat belt alert arrangement, a vehicle comprising an arrangement for control of a vehicle seat belt alert arrangement, a method for controlling a vehicle seat belt alert arrangement in a vehicle and use of an arrangement for control of a vehicle seat belt alert arrangement.

### BACKGROUND

Many modern vehicles are equipped with seat belt systems, arranged to keep a vehicle occupant in a desired position before, during and after a collision. When the seat belt system is in use, the vehicle occupant may be restrained in the seat during a collision scenario whereby injuries may be avoided or less severe. Some seat belt systems are arranged to be pre-tensioned in order to tighten the vehicle occupant against the seat when an accident is imminent. In some restraint systems, the seat position and/or seat belt system are adjusted in accordance with the expected collision scenario in order to minimize peak loads acting on the seat occupants.

Document EP0560351 A2 discloses a presence detecting and safety control apparatus. The apparatus positively discriminates between an object and a person through the detection of closer physical movement by the heart activity and the breathing unique to the life activity of the human body from the output signal of the vibration sensor disposed on the seat so as to decide whether or not a person is present with accuracy.

The maintenance of the safety operation of the moving vehicle can be realized. The starting operation of the moving vehicle is stopped if the reserved seat is absent in accordance with the decision result. In the case where the person is present, the driving operation is not started before the engagement of the seat belt is detected.

If a seat belt system is used, a position of the vehicle occupant can, at least to some extent, be known in a collision scenario such that also other safety systems may be controlled to function in an optimal manner. If the seat belt system is in use, a vehicle airbag system with e.g. front- and side airbags may be deployed such that forces acting on the vehicle occupant during a collision scenario can be kept relatively low compared to a scenario in which the seat belt system is not in use.

Some vehicles are equipped with seat belt alert arrangements, arranged to remind or motivate seat occupants to use existing seat belt systems. If it is detected that a load is acting on a seat when the seat belt system is not used, an alert signal may be activated.

In a scenario where an object, such as a handbag or a shopping bag, is placed on a passenger seat, there is a risk that an alert signal is activated. A vehicle driver may then have to turn his/her attention to the alert signal although no passenger is unbelted in the passenger seat. He/she may then have to listen to the "false alarm", alternatively stop the vehicle and put the seat belt in a used position over/under the object in the passenger seat or remove the object from the seat.

Thus, improvements in the field of arrangements for control of vehicle seat belt alert arrangements are still desirable.

### SUMMARY

Embodiments herein aim to provide an arrangement for control of a vehicle seat belt alert arrangement eliminating or at least reducing the problems and/or drawbacks associated with prior art solutions.

According to an embodiment, this is provided by an arrangement for control of a vehicle seat belt alert arrangement in a vehicle hosting the arrangement, the arrangement comprising; a vehicle seat belt system, a processing unit, a first seat occupancy determination unit, arranged to determine if a vehicle seat is occupied or not, and to send information indicative thereof to the processing unit, a seat belt system use determination unit, arranged to determine if the seat belt system is in use or not, and to send information indicative thereof to the processing unit, the processing unit being arranged to receive information from the first seat occupancy determination unit and the seat belt system use determination unit, the seat belt alert arrangement, arranged to send an alert signal in a vehicle compartment of said vehicle wherein the arrangement further comprises a second seat occupancy determination unit, arranged to determine if the vehicle seat is occupied by a human being or not, and to send information indicative thereof to the processing unit, and wherein the processing unit is arranged to receive information also from the second seat occupancy determination unit and to control the seat belt alert arrangement based on the information from the first seat occupancy determination unit, the second seat occupancy determination unit and the seat belt system use determination unit, such that an alert signal is sent in the vehicle compartment only if the seat belt system is determined to be not in use, and an occupied seat is determined by both the first and the second seat occupancy determination unit.

Since the seat belt alert arrangement is controlled based on information from the first seat occupancy determination unit, the second seat occupancy determination unit and the seat belt system use determination unit, an alert signal is sent in the vehicle compartment only if the seat belt system is determined to be not in use, and an occupied seat is determined by both the first and the second seat occupancy determination unit.

The accuracy of the arrangement is high since both the first and the second seat occupancy determination unit are used for the determination whether the seat is occupied or not. The second seat occupancy determination unit can differentiate between a human being and an object, and is arranged to determine if the vehicle seat is occupied by a human being or not. Due to this, unnecessary activation of the alert signal can be avoided. The alert signal is sent in the vehicle compartment only when it is detected that a human being is occupying a seat and the seat belt system is not in use.

Hereby the driver/vehicle operator may focus on operating the vehicle instead of having to turn his/her attention to an activated seat belt alert which is sending an alert when a handbag or similar is placed in a passenger seat. Since his/her attention can remain on operating the vehicle, safety may be enhanced. An arrangement according to embodiments described herein may also avoid vehicle operator irritation or frustration originating from unnecessarily activation of a seat belt alert.

In addition, since both the first and the second seat occupancy determination unit are used, and since the second seat occupancy determination unit is arranged to determine if the vehicle seat is occupied by a human being or not, a driver may place a handbag or similar on a passenger seat not occupied by a passenger. Due to this, the driver may have easy access to the handbag or similar without any risk of false alarms.

Thus, hereby is provided an arrangement for control of a vehicle seat belt alert arrangement, eliminating or at least reducing the problems and/or drawbacks associated with prior art solutions.

According to some embodiments, the first seat occupancy determination unit comprises a weight sensor. Since the first seat occupancy determination unit comprises a weight sensor, the determination whether a seat is occupied or not can be performed in an easy and reliable manner.

According to some embodiments, the second seat occupancy determination unit comprises an image capturing unit, and the second seat occupancy determination unit is arranged to determine if the vehicle seat is occupied by a human being or not by the image capturing unit arranged to monitor the vehicle seat, and in that at least one of the processing unit and the image capturing unit comprises logic for object and/or human being-recognition. Since the second seat occupancy determination unit is arranged to determine if the vehicle seat is occupied by a human being or not by an image capturing unit arranged to monitor the vehicle seat, the determination can be performed with high accuracy. The image capturing unit may be arranged to recognize a human silhouette, movements, a face, or any other recognizable parts associated with human beings.

An image capturing unit used for other purposes may be used also for determining if the vehicle seat is occupied by a human being or not.

According to some embodiments, the second seat occupancy determination unit comprises at least one of a radar, a lidar and an IR-system, and the second seat occupancy determination unit is arranged to determine if the vehicle seat is occupied by a human being or not by at least one of the radar, the lidar and the IR-system, arranged to monitor the vehicle seat, and in that at least one of the processing unit and the at least one of the radar, the lidar and the IR-system comprises logic for recognition of human beings. Since the second seat occupancy determination unit is arranged to determine if the vehicle seat is occupied by a human being or not by at least one of a radar, a lidar and an IR-system arranged to monitor the vehicle seat, the determination can be performed with high accuracy. The at least one of the radar, the lidar and the IR-system may be arranged to send and receive electromagnetic radiation, and to recognize human beings and/or objects.

According to some embodiments, the second seat occupancy determination unit comprises a human being movement detection system, and the second seat occupancy determination unit is arranged to determine if the vehicle seat is occupied by a human being or not by the human being movement detection system, and in that at least one of the processing unit and the human being movement detection system comprises logic for movement-determination. Since the second seat occupancy determination unit is arranged to determine if the vehicle seat is occupied by a human being movement detection system arranged to monitor the vehicle seat, the determination can be performed with high accuracy. The human being movement detection system may be arranged to, via sensors, detect the movement of a human heart, movements associated with breathing and/or other body movements.

According to some embodiments, the seat belt alert arrangement, is arranged to send at least one of a visual alert signal, an audio alert signal and a haptic alert signal in the vehicle compartment. Since at least one of a visual alert signal, an audio alert signal and a haptic alert signal is sent in the vehicle compartment, vehicle occupants may be alerted in a clear and unmistakable manner.

According to some embodiments, the seat belt alert arrangement is arranged to increase an alert magnitude based on at least one of a time-parameter and a host vehicle driven distance-parameter. Since the seat belt alert arrangement is arranged to increase an alert magnitude based on at least one of a time-parameter and a host vehicle driven distance-parameter, vehicle occupants may be alerted in a clear and unmistakable manner. A time-parameter is a parameter relating to a time since the host vehicle is started or activated. A host vehicle driven distance-parameter is a parameter relating to a distance driven by the host vehicle since the host vehicle is started or activated.

According to some embodiments, the processing unit is arranged to control the seat belt alert arrangement such that the alert signal is sent in the vehicle compartment within a predefined time from a host vehicle activation or within a predefined distance driven from the host vehicle activation. Since the processing unit is arranged to control the seat belt alert arrangement such that the alert signal is sent in the vehicle compartment within a predefined time from a host vehicle activation or within a predefined distance driven from the host vehicle activation, the start of the alert signal can be activated when it is appropriate. The arrangement may be set to start the alert signal after e.g. 5-60 seconds or 5-100 meters from activation of the host vehicle, thereby allowing a vehicle operator to perform minor operations of the vehicle, such as adjust a parking position, without activation of the alert signal.

Embodiments herein also aim to provide a vehicle seat comprising an arrangement for control of a vehicle seat belt alert arrangement without the problems or drawbacks described above.

According to some embodiments, this is provided by a vehicle seat comprising an arrangement for control of a vehicle seat belt alert arrangement according to embodiments disclosed herein. Hereby a vehicle seat belt alert arrangement can be controlled based on input from both a first seat occupancy determination unit, a second seat occupancy determination unit and a seat belt system use determination unit. A vehicle seat comprising an arrangement for control of a vehicle seat belt alert arrangement according to embodiments disclosed herein may also be retrofitted into existing vehicles.

Thus, hereby is provided a vehicle seat comprising an arrangement for control of a vehicle seat belt alert arrangement, eliminating or at least reducing the problems and/or drawbacks associated with prior art solutions.

Embodiments herein also aim to provide a vehicle comprising an arrangement for control of a vehicle seat belt alert arrangement without the problems or drawbacks described above.

According to some embodiments, this is provided by a vehicle comprising an arrangement for control of a vehicle seat belt alert arrangement according to embodiments disclosed herein. Hereby a vehicle seat belt alert arrangement can be controlled based on input from both a first seat occupancy determination unit, a second seat occupancy determination unit and a seat belt system use determination unit.

Thus, hereby is provided a vehicle comprising an arrangement for control of a vehicle seat belt alert arrangement, eliminating or at least reducing the problems and/or drawbacks associated with prior art solutions.

Embodiments herein also aim to provide a method for controlling a vehicle seat belt alert arrangement in a vehicle without the problems or drawbacks described above.

According to some embodiments, this is provided by a method for controlling a vehicle seat belt alert arrangement in a vehicle, the method comprises;
- determining, by a first seat occupancy determination unit, if a vehicle seat is occupied or not, and sending information indicative thereof to a processing unit,
- determining, by a seat belt system use determination unit, if a seat belt system is in use or not, and sending information indicative thereof to the processing unit,
- determining, by a second seat occupancy determination unit, if the vehicle seat is occupied by a human being or not, and sending information indicative thereof to the processing unit,
- receiving, by the processing unit, information from the first seat occupancy determination unit, the second seat occupancy determination unit and the seat belt system use determination unit,
- controlling the seat belt alert arrangement based on the information, such that an alert signal is sent in the vehicle compartment only if the seat belt system is determined to be unused, and an occupied seat is determined by both the first and the second seat occupancy determination unit.

Since the vehicle seat belt alert arrangement is controlling the seat belt alert arrangement such that an alert signal is sent in the vehicle compartment only if the seat belt system is determined to be unused, and an occupied seat is determined by both the first and the second seat occupancy determination unit, drawbacks associated with prior art solutions are reduced and/or eliminated.

Thus, hereby is provided a method for controlling a vehicle seat belt alert arrangement in a vehicle eliminating or at least reducing the problems and/or drawbacks associated with prior art solutions.

According to some embodiments, the method further comprises; increasing an alert magnitude based on at least one of a time-parameter and a host vehicle driven distance-parameter. Since the method comprises; increasing an alert magnitude based on at least one of a time-parameter and a host vehicle driven distance-parameter, vehicle occupants may be alerted in a clear and unmistakable manner.

According to some embodiments, the method further comprises; controlling the seat belt alert arrangement such that the alert signal is sent in the vehicle compartment within a predefined time from a host vehicle activation or within a predefined distance driven from the host vehicle activation. Since the method comprises; controlling the seat belt alert arrangement such that the alert signal is sent in the vehicle compartment within a predefined time from a host vehicle activation or within a predefined distance driven from the host vehicle activation, the start of the alert signal can be activated when appropriate.

Embodiments herein also aim to provide use of an arrangement for controlling a vehicle seat belt alert arrangement in a vehicle without the problems or drawbacks described above.

According to some embodiments, this is provided by use of an arrangement for control of a vehicle seat belt alert arrangement in a vehicle hosting the arrangement, the arrangement comprising; a vehicle seat belt system, a processing unit, a first seat occupancy determination unit, arranged to determine if a vehicle seat is occupied or not, and to send information indicative thereof to the processing unit, a seat belt system use determination unit, arranged to determine if the seat belt system is in use or not, and to send information indicative thereof to the processing unit, the processing unit being arranged to receive information from the first seat occupancy determination unit and the seat belt system use determination unit, the seat belt alert arrangement, arranged to send an alert signal in a vehicle compartment of said vehicle wherein the arrangement further comprises a second seat occupancy determination unit, arranged to determine if the vehicle seat is occupied by a human being or not, and to send information indicative thereof to the processing unit, and wherein the processing unit is arranged to receive information also from the second seat occupancy determination unit and to control the seat belt alert arrangement based on the information from the first seat occupancy determination unit, the second seat occupancy determination unit and the seat belt system use determination unit, such that an alert signal is sent in the vehicle compartment only if the seat belt system is determined to be not in use, and an occupied seat is determined by both the first and the second seat occupancy determination unit.

Since the arrangement for control of a vehicle seat belt alert arrangement in a vehicle hosting the arrangement is used, drawbacks associated with prior art solutions are reduced and/or eliminated.

Further features of, and advantages with, the embodiments herein will become apparent when studying the appended claims and the following detailed description. Those skilled in the art will realize that different features of the embodiments herein may be combined to create embodiments other than those described in the following, without departing from the scope of the appended claims.

### BRIEF DESCRIPTION OF THE DRAWINGS

The various aspects of embodiments herein, including its particular features and advantages, will be readily understood from the following detailed description and the accompanying drawings, in which:
Fig. 1 illustrates a vehicle, a vehicle compartment a vehicle seat and an arrangement for control of a vehicle seat belt alert arrangement according to some embodiments.
Fig. 2 illustrates a method for controlling a vehicle seat belt alert arrangement according to some alternative embodiments.

### DETAILED DESCRIPTION

Embodiments herein will now be described more fully with reference to the accompanying drawings, in which example embodiments are shown. However, this application should not be construed as limited to the embodiments set forth herein. Disclosed features of example embodiments may be combined as readily understood by one of ordinary skill in the art to which this application belongs. Like numbers refer to like elements throughout.

Well-known functions or constructions will not necessarily be described in detail for brevity and/or clarity.

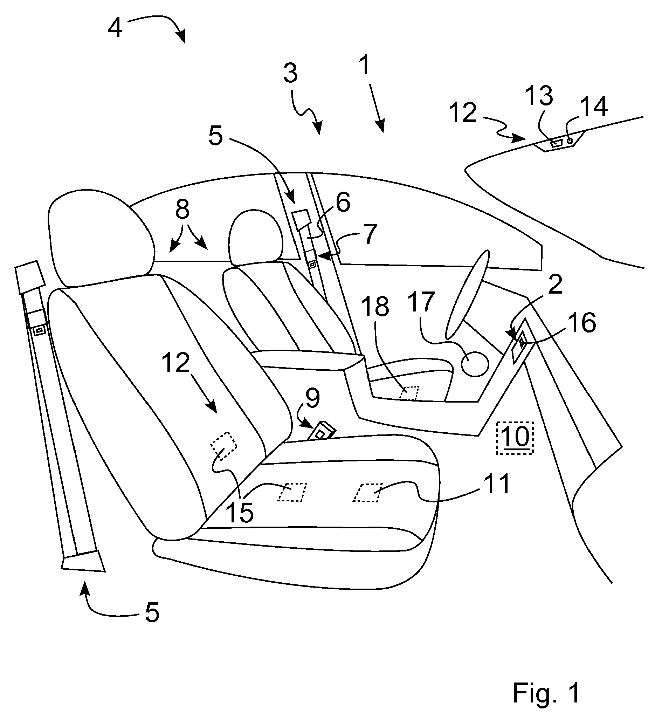

Fig. 1 illustrates an arrangement **1** for control of a vehicle seat belt alert arrangement **2** according to some embodiments. The arrangement 1 is illustrated in a vehicle compartment **3** of a vehicle **4** hosting the arrangement 1.

The arrangement 1 comprises a vehicle seat belt system **5.** The vehicle seat belt system 5 may include seat belts **6** and buckles **7.** A buckle 7 may be connected to the seat belt 6 such that the buckle 7 may slide along the seat belt 6. Hereby use of the seat belt system 5 is facilitated and vehicle occupants of different sizes may use the seat belt system 5. Some or all of the vehicle seats 8 may be provided with a vehicle seat belt system 5. In Fig. 1 a front passenger seat is illustrated. According to other embodiments one or more rear passenger seats, such as a rear side seat or rear central seat includes the arrangement 1.

The seats **8** are arranged to host sitting vehicle occupants. A vehicle occupant may enter a seat 8, such as a passenger seat next to the driver's seat or a rear passenger seat. When the vehicle occupant is seated, he/she can use the seat belt system 5 arranged at the selected seat 8. The seat belt system 5 is known by the skilled person and may be attached to structural members of the vehicle 4, such as inner beams, rails, attachment hooks or similar. According to some embodiments, the seat belt system 5 may be attached to the seat 8. The seat belt system 5, the seat belt 6 and the buckle 7 are dimensioned and designed to restrain a vehicle occupant in the seat 8 during a collision.

The seat belt system 5 is in use when it is capable to restrain a vehicle occupant against the seat 8. The buckle 7 may comprise two connectable parts, one part attached to the seat belt 6 and one part attached to a structural vehicle member in the vicinity of the seat 8. The parts may connect mechanically, and may be disconnected via a button, a lever or similar.

A seat belt system use determination unit **9** is arranged to determine if the seat belt system 5 is in use or not. The determination may be performed electrically and/or mechanically, and the seat belt system use determination unit 9 is capable to detect if a buckle 7 or a buckle part is connected to another buckle part or a structural vehicle member.

The seat belt system use determination unit 9 may send information by wire or wirelessly of whether the seat belt system 5 is in use or not to a processing unit **10.** The processing unit 10 may comprise one or more processors, with associated logic, and one or more memory units in communication with the one or more processors. The processing unit 10 may be arranged in any suitable location in the vehicle 4. A separate processing unit 10 may be used in the arrangement 1, alternatively a processing unit 10 also used in other systems or arrangements of the vehicle may be used.

As illustrated in Fig. 1, the arrangement 1 comprises a first seat occupancy determination unit **11,** arranged to determine if a vehicle seat 8 is occupied or not, and to send information indicative thereof to the processing unit 10. The first seat occupancy determination unit 11 may determine if a seat 8 is occupied via one or more weight sensors, arranged in or in the vicinity of a seat part or seat structure. The sensors may detect direct pressure between two sensor members or pressure in a filled bladder.

The arrangement according to the Fig. 1 illustration also comprises a second seat occupancy determination unit **12,** arranged to determine if a vehicle seat 8 is occupied by a human being or not, and to send information indicative thereof to the processing unit 10.

The processing unit 10 is arranged to receive information by wire or wirelessly from the first and second seat occupancy determination unit 11, 12 and the seat belt system use determination unit 9.

The second seat occupancy determination unit 12 may be arranged to determine if the vehicle seat 8 is occupied by a human being or not by an image capturing unit **13** arranged to monitor the vehicle seat 8. The image capturing unit 13 may be arranged in any position from where the seat 8 may be monitored, for example in a dashboard, a centerstack, a display or in the vicinity of a windshield. The image capturing unit 13 may be arranged near a rear-view mirror, e.g. in a front part of an inner vehicle ceiling. The processing unit 10 and/or the image capturing unit 13 comprise logic for object and/or human being-recognition. Hereby it can be determined whether a human being, such as a person, is occupying the seat 8, or if the seat 8 is occupied by an object such as a bag or a briefcase.

According to some embodiments, the second seat occupancy determination unit 12 is arranged to determine if the vehicle seat 8 is occupied by a human being or not by at least one of a radar, a lidar and an IR (infrared) -system **14,** arranged to monitor the vehicle seat. The radar, lidar or IR-system 14 may use electromagnetic radiation and may be arranged in any position from where the seat 8 may be monitored, for example in a dashboard, a centerstack, a display or in the vicinity of a windshield. The radar, lidar or the IR-system 14 may be arranged near a rear-view mirror, e.g. in a front part of an inner vehicle ceiling.

According to some embodiments, the second seat occupancy determination unit 12 is arranged to determine if the vehicle seat 8 is occupied by a human being or not by a human being movement detection system **15.** The human being movement detection system 15 may comprise sensors in- or near the vehicle seat 8, arranged to detect repetitive- and/or non-repetitive movements, vibrations etc. The human being movement detection system 15 may recognize typical human being movements, such as breathing, inhaling, exhaling, posture changes, arm-, leg- or head movements, changes in a point of gravity and/or heartbeats.

The processing unit 10 is arranged to receive information also from the second seat occupancy determination unit 12 and to control the seat belt alert arrangement 2 based on the information from the first seat occupancy determination unit 11, the second seat occupancy determination unit 12 and the seat belt system use determination unit 9. The seat belt alert arrangement 2 is controlled such that an alert signal is sent in the vehicle compartment 3 only if the seat belt system 5 is determined to be not in use, and an occupied seat 8 is determined by both the first and the second seat occupancy determination units 11, 12.

The seat belt alert arrangement 2 is arranged to send at least one of a visual alert signal, an audio alert signal and a haptic alert signal in the vehicle compartment 3. A visual alert signal may be sent via a visual alert signal arrangement 16. The visual alert signal arrangement 16 may be a display, arranged to provide a vehicle occupant with a warning symbol, a text message or similar. The display may be any display visible from the vehicle compartment 3, such as a driver information display, a head-up-display or a centerstack display. Alternatively, the visual alert signal arrangement 16 may be a light or a LED. An audio alert signal may be sent via an audio alert signal arrangement **17.** The audio alert signal arrangement 17 may be a loudspeaker, a vehicle stereo system or a separate audio unit. A haptic alert signal may be sent via a haptic alert signal arrangement **18** such as an actuator or a piezoelectric motor. The haptic alert signal arrangement 18 may provide a vehicle occupant with haptic input in form of movements or vibrations of any kind. The haptic alert signal arrangement 18 may be arranged e.g. in one or more vehicle seat 8, a steering wheel or a pedal.

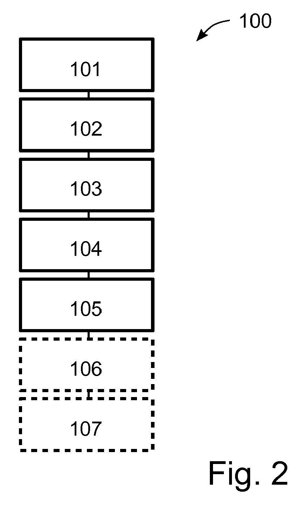

Fig. 2 illustrates a method **100** for controlling a vehicle seat belt alert arrangement in a vehicle according to some embodiments. The method comprises: Determining **101,** by a first seat occupancy determination unit, if a vehicle seat is occupied or not, and sending information indicative thereof to a processing unit. Determining **102,** by a seat belt system use determination unit, if a seat belt system is in use or not, and sending information indicative thereof to the processing unit. Determining **103,** by a second seat occupancy determination unit, if the vehicle seat is occupied by a human being or not, and sending information indicative thereof to the processing unit. Receiving **104,** by the processing unit, information from the first seat occupancy determination unit, the second seat occupancy determination unit and the seat belt system use determination unit. Controlling **105** the seat belt alert arrangement based on the information, such that an alert signal is sent in the vehicle compartment only if the seat belt system is determined to be unused, and an occupied seat is determined by both the first and the second seat occupancy determination unit.

According to some embodiments, illustrated with dashed lines in Fig. 2, the method 100 further comprises: Increasing **106** an alert magnitude based on at least one of a time-parameter and a host vehicle driven distance-parameter.

According to some further embodiments, illustrated with dashed lines in Fig. 2, the method 100 further comprises: Controlling **107** the seat belt alert arrangement such that the alert signal is sent in the vehicle compartment within a predefined time from a host vehicle activation or within a predefined distance driven from the host vehicle activation.

The method 100 is stopped when if the seat belt system 5 is buckled up.

Although the aspects has been described with reference to example embodiments, many different alterations, modifications and the like will become apparent for those skilled in the art. Therefore, it is to be understood that the foregoing is illustrative of various example embodiments and the scope of the appended claims is not to be limited to the specific embodiments disclosed and that modifications to the disclosed embodiments, combinations of features of disclosed embodiments as well as other embodiments are intended to be included within the scope of the appended claims.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. An arrangement (1) for control of a vehicle seat belt alert arrangement (2) in a vehicle (4) hosting the arrangement (1), the arrangement (1) comprising;
- a vehicle seat belt system (5),
- a processing unit (10),
- a first seat occupancy determination unit (11) in form of a weight sensor, arranged to determine if a vehicle seat (8) is occupied or not, and to send information indicative thereof to the processing unit (10),
- a seat belt system use determination unit (9), arranged to determine if the seat belt system (5) is in use or not, and to send information indicative thereof to the processing unit (10),
the processing unit (10) being arranged to receive information from the first seat occupancy determination unit (11) and the seat belt system use determination unit (9),
- the seat belt alert arrangement (2), arranged to send an alert signal in a vehicle compartment (3) of said vehicle (4)
**characterized in that**
the arrangement (1) further comprises a second seat occupancy determination unit (12), comprising an image capturing unit (13) arranged to monitor the vehicle seat (8) or an IR-system (14) arranged to monitor the vehicle seat (8), arranged to determine if the vehicle seat (8) is occupied by a human being or not, and to send information indicative thereof to the processing unit (10), that at least one of the processing unit (10), the image capturing unit (13) and the IR-system comprises logic for object and/or human being-recognition, and
**in that** the processing unit (10) is arranged to receive information also from the second seat occupancy determination unit (12) and to control the seat belt alert arrangement (2) based on the information from the first seat occupancy determination unit (11), the second seat occupancy determination unit (12) and the seat belt system use determination unit (9), such that an alert signal is sent in the vehicle compartment (3) only if the seat belt system (5) is determined to be not in use, and an occupied seat (8) is determined by both the first and the second seat occupancy determination unit (11, 12).

2. An arrangement (1 ) according to any one of the preceding claims, **characterized in that** the seat belt alert arrangement (2), is arranged to send at least one of a visual alert signal, an audio alert signal and a haptic alert signal in the vehicle compartment (3).

3. An arrangement (1) according to any one of the preceding claims, **characterized in that** the seat belt alert arrangement (2) is arranged to increase an alert magnitude based on at least one of a time-parameter and a host vehicle driven distance-parameter.

4. An arrangement (1) according to any one of the preceding claims, **characterized in that** the processing unit (10) is arranged to control the seat belt alert arrangement (2) such that the alert signal is sent in the vehicle compartment (3) within a predefined time from a host vehicle activation or within a predefined distance driven from the host vehicle activation.

5. A vehicle seat (8), **characterized in that** the vehicle seat (8) comprises an arrangement (1) according to any one of the preceding claims.

6. A vehicle (4), **characterized in that** the vehicle (4) comprises an arrangement (1) according to any one of the claims 1-4.

7. A method (100) for controlling a vehicle seat belt alert arrangement in a vehicle, the method comprises;
- **determining** (101), by a first seat occupancy determination unit in form of a weight sensor, if a vehicle seat is occupied or not, and sending information indicative thereof to a processing unit,
- **determining** (102), by a seat belt system use determination unit, if a seat belt system is in use or not, and sending information indicative thereof to the processing unit,
- **determining** (103), by a second seat occupancy determination unit, comprising an image capturing unit (13) arranged to monitor the vehicle seat (8) or an IR-system (14) arranged to monitor the vehicle seat (8), if the vehicle seat is occupied by a human being or not, and sending information indicative thereof to the processing unit, at least one of the processing unit (10), the image capturing unit (13) and the IR-system comprises logic for object and/or human being-recognition,
- **receiving** (104), by the processing unit, information from the first seat occupancy determination unit, the second seat occupancy determination unit and the seat belt system use determination unit,
- **controlling** (105) the seat belt alert arrangement based on the information, such that an alert signal is sent in the vehicle compartment only if the seat belt system is determined to be unused, and an occupied seat is determined by both the first and the second seat occupancy determination unit.

8. A method (100) according to claim 7, the method (100) further comprises;
- **increasing** (106) an alert magnitude based on at least one of a time-parameter and a host vehicle driven distance-parameter.

9. A method (100) according to claim 7 or claim 8, the method (100) further comprises;
- **controlling** (107) the seat belt alert arrangement such that the alert signal is sent in the vehicle compartment within a predefined time from a host vehicle activation or within a predefined distance driven from the host vehicle activation.

10. Use (200) of the arrangement (1) according to any one of claims 1-4 for control of a vehicle seat belt alert arrangement in a vehicle hosting the arrangement.

## Patentansprüche

1. Anordnung (1) zur Steuerung einer Fahrzeugsicherheitsgurtalarm-Anordnung (2) in einem Fahrzeug (4), in dem die Anordnung (1) untergebracht ist, wobei die Anordnung (1) Folgendes umfasst:
- ein Fahrzeugsicherheitsgurtsystem (5),
- eine Verarbeitungseinheit (10),
- eine erste Sitzbelegungsbestimmungseinheit (11) in Form eines Gewichtssensors, die so angeordnet ist, dass sie bestimmen kann, ob ein Fahrzeugsitz (8) belegt ist oder nicht, und darauf hinweisende Informationen an die Verarbeitungseinheit (10) senden kann,
- eine Sicherheitsgurtsystem-Verwendungsbestimmungseinheit (9), die so angeordnet ist, dass sie bestimmen kann, ob das Sicherheitsgurtsystem (5) in Verwendung ist oder nicht, und darauf hinweisende Informationen an die Verarbeitungseinheit (10) senden kann,
wobei die Verarbeitungseinheit (10) so angeordnet ist, dass sie Informationen von der ersten Sitzbelegungsbestimmungseinheit (11) und der Sicherheitsgurtsystem-Verwendungsbestimmungseinheit (9) empfangen kann,
- wobei die Sicherheitsgurtalarmanordnung (2) so angeordnet ist, dass sie ein Alarmsignal in einem Fahrzeuginnenraum (3) des Fahrzeugs (4) senden kann,
**dadurch gekennzeichnet, dass**
die Anordnung (1) ferner eine zweite Sitzbelegungsbestimmungseinheit (12) umfasst, die eine Bilderfassungseinheit (13) umfasst, die so angeordnet ist, dass sie den Fahrzeugsitz (8) überwacht, oder ein IR-system (14), das so angeordnet ist, dass es den Fahrzeugsitz (8) überwacht, bestimmt, ob der Fahrzeugsitz (8) durch einen Menschen belegt ist oder nicht, und darauf hinweisende Informationen an die Verarbeitungseinheit (10) sendet, wobei mindestens eines von der Verarbeitungseinheit (10), der Bilderfassungseinheit (13) bzw. des IR-Systems eine Logikschaltung zur Objekt- und/oder Personenerkennung umfasst, und
**dahingehend, dass** die Verarbeitungseinheit (10) so angeordnet ist, dass sie auch Informationen von der zweiten Sitzbelegungsbestimmungseinheit (12) empfängt und die Sicherheitsgurtalarmanordnung (2) auf Basis der Informationen von der ersten Sitzbelegungsbestimmugnseinheit (11), der zweiten Sitzbelegungsbestimmungseinheit (12) und der Sicherheitsgurtsystem-Verwendungsbestimmungseinheit (9) steuert, so dass ein Alarmsignal nur dann im Fahrzeuginnenraum (3) gesendet wird, wenn das Sicherheitsgurtsystem (5) als nicht in Verwendung ermittelt wird, und ein belegter Sitz (8) sowohl durch die erste als auch die zweite Sitzbelegungsbestimmungseinheit (11, 12) ermittelt wird.

2. Anordnung (1) nach einem der vorstehenden Ansprüche, **dadurch gekennzeichnet, dass** die Sicherheitsgurtalarmanordnung (2) so angeordnet ist, dass sie mindestens eines von einem optischen Alarmsignal, einem akustischen Alarmsignal und einem haptischen Alarmsignal im Fahrzeuginnenraum (3) sendet.

3. Anordnung (1) nach einem der vorstehenden Ansprüche, **dadurch gekennzeichnet, dass** die Sicherheitsgurtalarmanordnung (2) so angeordnet ist, dass eine Alarmstärke basierend auf mindestens einem von einem Zeitparameter und einem Parameter der zurückgelegten Distanz des Trägerfahrzeugs gesteigert wird.

4. Anordnung (1) nach einem der vorstehenden Ansprüche, **dadurch gekennzeichnet, dass** die Verarbeitungseinheit (10) so angeordnet ist, dass die Sicherheitsgurtalarmanordnung (2) so gesteuert wird, dass das Alarmsignal im Fahrzeuginnenraum (3) innerhalb einer vorher festgelegten Zeit von einer Trägerfahrzeugaktivierung oder innerhalb eines vorher festgelegten von der Trägerfahrzeugaktivierung zurückgelegten Abstands gesendet wird.

5. Fahrzeugsitz (8), **dadurch gekennzeichnet, dass** der Fahrzeugsitz (8) eine Anordnung (1) nach einem der vorgenannten Ansprüche umfasst.

6. Fahrzeug (4), **dadurch gekennzeichnet, dass** das Fahrzeug (4) eine Anordnung (1) nach einem der Ansprüche 1-4 umfasst.

7. Verfahren (100) zur Steuerung einer Fahrzeugsicherheitsgurtalarm-Anordnung in einem Fahrzeug, wobei das Verfahren Folgendes umfasst:
**das Bestimmen** (101) durch eine erste Sitzbelegungsbestimmungseinheit in Form eines Gewichtssensors, ob ein Fahrzeugsitz belegt ist oder nicht, und das Senden von darauf hinweisenden Informationen an eine Verarbeitungseinheit,
**das Bestimmen** (102) durch eine Sicherheitsgurtsystem-Verwendungsbestimmungseinheit, ob ein Sicherheitsgurtsystem in Verwendung ist oder nicht, und das Senden darauf hinweisender Informationen an die Verarbeitungseinheit,
**das Bestimmen** (103) durch eine zweite Sitzbelegungsbestimmungseinheit, die eine Bilderfassungseinheit (13) umfasst, die so angeordnet ist, dass sie den Fahrzeugsitz (8) überwacht, oder durch ein IR-System (14), das so angeordnet ist, dass es den Fahrzeugsitz (8) überwacht, dahingehend, ob der Fahrzeugsitz durch einen Menschen belegt ist oder nicht, und um darauf hinweisende Informationen an die Verarbeitungseinheit (10) zu senden, wobei mindestens eines von der Verarbeitungseinheit (10), der Bilderfassungseinheit (13) bzw. des IR-Systems eine Logikschaltung zur Objekt- und/oder Personenerkennung umfasst,
**das Empfangen** (104) durch die Verarbeitungseinheit von Informationen von der ersten Sitzbelegungsbestimmungseinheit, der zweiten Sitzbelegungsbestimmungseinheit und der Sicherheitsgurtsystem-Verwendungsbestimmungseinheit,
**das Steuern** (105) der Sicherheitsgurtalarmanordnung basierend auf den Informationen, so dass ein Alarmsignal nur dann im Fahrzeuginnenraum gesendet wird, wenn das Sicherheitsgurtsystem als nicht verwendet ermittelt wird, und ein belegter Sitz sowohl durch die erste als auch die zweite Sitzbelegungsbestimmungseinheit ermittelt wird.

8. Verfahren (100) nach Anspruch 7, wobei das Verfahren (100) ferner Folgendes umfasst:
**das Steigern** (106) einer Alarmstärke basierend auf mindestens einem von einem Zeitparameter und einem Parameter der zurückgelegten Distanz des Trägerfahrzeugs.

9. Verfahren (100) nach Anspruch 7 oder Anspruch 8, wobei das Verfahren (100) fener Folgendes umfasst:
**das Steuern** (107) der Sicherheitsgurtalarmanordnung, so dass das Alarmsignal im Fahrzeuginnenraum innerhalb einer vorher festgelegten Zeit von einer Trägerfahrzeugaktivierung oder innerhalb eines vorher festgelegten Abstands, der von der Trägerfahrzeugaktivierung zurückgelegt wird, gesendet wird.

10. Verwendung (200) der Anordnung (1) nach einem der Ansprüche 1-4 zur Steuerung einer Fahrzeugsicherheitsgurtalarm-Anordnung in einem Fahrzeug, in dem die Anordnung untergebracht ist.

## Revendications

1. Agencement (1) pour la commande d'un dispositif d'alerte de ceinture de sécurité de siège de véhicule (2) dans un véhicule (4) équipé de cet agencement (1), cet agencement (1) comprenant :
- un système de ceinture de sécurité de siège de véhicule (5),
- une unité centrale (10)
- une première unité de détermination d'occupation de siège (11) sous la forme d'un capteur de poids, agencée de façon à déterminer si un siège de véhicule (8) est occupé ou pas, et à envoyer des informations indicatives de cela à l'unité centrale (10),
- une unité de détermination d'utilisation de système de ceinture de sécurité de siège (9), agencée de façon à déterminer si le système de ceinture de sécurité de siège (5) est utilisé ou pas, et à envoyer des informations indicatives de cela à l'unité centrale (10), l'unité centrale (10) étant agencée de façon à recevoir des informations de la première unité de détermination d'occupation de siège (11) et de l'unité de détermination d'utilisation du système de ceinture de sécurité de siège (9),
- le dispositif d'alerte de ceinture de sécurité de siège (2) étant agencé de façon à envoyer un signal d'alerte dans un compartiment de véhicule (3) dudit véhicule (4),
**caractérisé en ce que**
cet agencement (1) comprend en outre une deuxième unité de détermination d'occupation de siège (12), comprenant une unité de saisie d'image (13) agencée de façon à surveiller le siège du véhicule (8) ou un système à infrarouges (14) agencé de façon à surveiller le siège du véhicule (8), agencés de façon à déterminer si le siège du véhicule (8) est occupé par un être humain ou pas, et à envoyer des informations indicatives de cela à l'unité centrale (10), et **en ce qu'**au moins soit l'unité centrale (10), soit l'unité de saisie d'image (13), soit le système à infrarouges comprend une logique pour la reconnaissance d'objet et/ou d'être humain, et
**en ce que** l'unité centrale (10) est agencée de façon à recevoir aussi des informations de la deuxième unité de détermination d'occupation de siège (12) et à commander le dispositif d'alerte de ceinture de sécurité de siège (2) en se basant sur les informations provenant de la première unité de détermination d'occupation de siège (11), de la deuxième unité de détermination d'occupation de siège (12) et de l'unité de détermination d'utilisation du système de ceinture de sécurité de siège (9), de manière à ce qu'un signal d'alerte ne soit envoyé dans le compartiment du véhicule (3) que s'il est déterminé que le système de ceinture de sécurité de siège (5) n'est pas utilisé, et s'il est déterminé qu'un siège (8) est occupé à la fois par la première et la deuxième unité de détermination d'occupation de siège (11, 12) .

2. Agencement (1) selon l'une quelconque des revendications précédentes, **caractérisé en ce que** le dispositif d'alerte de ceinture de sécurité de siège (2) est agencé de façon à envoyer au moins soit un signal d'alerte visuel, soit un signal d'alerte sonore, soit un signal d'alerte haptique dans le compartiment du véhicule (3).

3. Agencement (1) selon l'une quelconque des revendications précédentes, **caractérisé en ce que** le dispositif d'alerte de ceinture de sécurité de siège (2) est agencé de façon à augmenter une grandeur d'alerte en se basant sur au moins soit un paramètre temporel, soit un paramètre de distance parcourue par le véhicule hôte.

4. Agencement (1) selon l'une quelconque des revendications précédentes, **caractérisé en ce que** l'unité centrale (10) est agencée de façon à commander le dispositif d'alerte de ceinture de sécurité de siège (2) de manière à ce que le signal d'alerte soit envoyé dans le compartiment du véhicule (3) dans les limites d'un temps prédéfini depuis une activation du véhicule hôte ou dans les limites d'une distance prédéfinie parcourue depuis l'activation du véhicule hôte.

5. Siège de véhicule (8), **caractérisé en ce que** ce siège de véhicule (8) comprend un agencement (1) selon l'une quelconque des revendications précédentes.

6. Véhicule (4), **caractérisé en ce que** ce véhicule (4) comprend un agencement (1) selon l'une quelconque des revendications 1 à 4.

7. Procédé (100) pour commander un dispositif d'alerte de ceinture de sécurité de siège de véhicule dans un véhicule, ce procédé comprenant :
- **la détermination** (101) par une première unité de détermination d'occupation de siège sous la forme d'un capteur de poids, de si un siège de véhicule est occupé ou pas, et l'envoi d'informations indicatives de cela à une unité de traitement,
- **la détermination** (102) par une unité de détermination d'utilisation de ceinture de sécurité de siège, de si système de ceinture de sécurité de siège est utilisé ou pas, et l'envoi d'informations indicatives de cela à l'unité centrale,
- **la détermination** (103), par une deuxième unité de détermination d'occupation de siège, comprenant une unité de saisie d'image (13) agencée de façon à surveiller le siège du véhicule (8) ou un système à infrarouges (14) agencé de façon à surveiller le siège du véhicule (8), de si le siège du véhicule est occupé par un être humain ou pas, et l'envoi d'informations indicatives de cela à l'unité centrale, au moins soit l'unité centrale (10), soit l'unité de saisie d'image (13), soit le système à infrarouges comprenant une logique pour la reconnaissance d'objet et/ou d'être humain,
- **la réception** (104), par l'unité centrale, d'informations provenant de la première unité de détermination d'occupation de siège, de la deuxième unité de détermination d'occupation de siège et de l'unité de détermination d'utilisation du système de ceinture de sécurité de siège,
- **la commande** (105) du dispositif d'alerte de ceinture de sécurité de siège en se basant sur les informations, telles qu'un signal d'alerte n'est envoyé dans le compartiment du véhicule que s'il est déterminé que le système de ceinture de sécurité de siège n'est pas utilisé, et que s'il est déterminé qu'un siège est occupé à la fois par la première et la deuxième unité de détermination d'occupation de siège.

8. Procédé (100) selon la revendication 7, ce procédé (100) comprenant en outre :
- **l'augmentation** (106) d'une grandeur d'alerte en se basant sur au moins soit un paramètre temporel, soit un paramètre de distance parcourue par le véhicule hôte.

9. Procédé (100) selon la revendication 7 ou la revendication 8, ce procédé (100) comprenant en outre :
- **la commande** (107) du dispositif d'alerte de ceinture de sécurité de siège de manière à ce que le signal d'alerte soit envoyé dans le compartiment du véhicule dans les limites d'un temps prédéfini depuis une activation du véhicule hôte ou dans les limites d'une distance prédéfinie parcourue depuis l'activation du véhicule hôte.

10. Utilisation (200) de l'agencement (1) selon l'une quelconque des revendications 1 à 4 pour la commande d'un dispositif d'alerte de ceinture de sécurité de siège dans un véhicule équipé de cet agencement.
